# DEMANDE DE BREVET EUROPEEN

(11) **EP 2 998 780 A1**
(43) Date de publication de la demande: **23.03.2016**
(21) Numéro de dépôt: 15186145.7
(22) Date de dépôt: 22.09.2015
(51) Int. Cl.: G02B 27/01, G02C 7/12, G02C 7/10

(54) **SYSTEME DE VISUALISATION SEMI-TRANSPARENT MONOCULAIRE**

(30) Priorité: 22.09.2014 FR 1402112
(71) Demandeur: THALES, 92400 Courbevoie (FR)
(72) Inventeur: CONI, Philippe, 33127 ST JEAN D'ILLAC (FR); LALUQUE, Laurent, 33000 BORDEAUX (FR); SERVANTIE, Xavier, 33187 LE HAILLAN Cedex (FR)
(74) Mandataire: Bréda, Jean-Marc

(57) **Abrégé**

le domaine de l'invention est celui des systèmes de visualisation (10) comprenant des moyens de génération (16) d'images d'un objet prédéterminé et un dispositif de visualisation (11) comportant un écran semi-transparent (12) de projection sur lequel se forment lesdites images. Le système de visualisation selon l'invention comporte une paire de lunettes (13) comportant deux verres, le premier verre transmettant lesdites images, le second verre ne les transmettant pas, les deux verres transmettant le paysage extérieur. L'obturation du premier verre peut être obtenue de façon passive par sélection spectrale ou par polarisation ou active par sélection séquentielle.

## Description

Le domaine de l'invention est celui des systèmes de visualisation permettant de présenter une image en superposition sur le mode extérieur. Les applications techniques sont principalement l'aide à la conduite de véhicule. L'invention s'applique tout particulièrement au domaine des planches de bord d'aéronef où le pilote a besoin de voir l'extérieur et simultanément d'avoir des informations sur la conduite de vol ou la navigation de l'appareil. L'invention peut aussi s'appliquer à tous types de systèmes de conduite et de contrôle affichant des symboles en superposition sur un environnement extérieur naturel. C'est le cas, par exemple, des tours de contrôle ou des postes de navigation de navire. L'environnement extérieur peut également être simulé. C'est, le cas, des simulateurs de pilotage ou des plateformes de contrôle et de commandement des drones.

Dans le domaine aéronautique ou dans des domaines techniques voisins, il existe un certain nombre de dispositifs de visualisation permettant de réaliser cette fonction, ces dispositifs sont également connus sous l'appellation anglaise de « See Through Display ».

La façon la plus simple pour superposer une image numérique sur un paysage consiste à projeter ou à former l'image sur un écran semi-transparent disposé devant le ou les pilotes. Cette solution présente les avantages de pouvoir couvrir une surface importante et de donner une image dans un grand champ visuel à la différence des systèmes de visualisation collimatés dont la pupille, par nature, est nécessairement limitée.

Cependant, par principe même, l'image projetée est à distance finie alors que le paysage est, généralement, à grande distance. La superposition sur l'extérieur n'est donc pas parfaite. En effet, soit le pilote accommode sur l'image projetée et le paysage extérieur se dédouble et est vu légèrement flou, soit le pilote accommode sur le paysage extérieur et c'est l'image projetée qui, cette fois-ci, se dédouble et est vue floue. Ce changement d'accommodation est à l'origine de fatigues oculaires importantes voire invalidantes.

Le système selon l'invention ne présente pas ces inconvénients. En effet, il privilégie l'image du paysage extérieur qui est vue de façon binoculaire alors que l'image issue du projecteur est vue de façon monoculaire. Plus précisément, l'invention a pour objet un système de visualisation comprenant des moyens de génération d'images d'un objet prédéterminé et un dispositif de visualisation comportant un écran semi-transparent de projection sur lequel se forment lesdites images, caractérisé en ce que le système de visualisation comporte une paire de lunettes comportant deux verres, le premier verre transmettant lesdites images, le second verre ne les transmettant pas, les deux verres transmettant le paysage extérieur.

Avantageusement, le système comporte des moyens de détection de la position relative de ladite paire de lunettes par rapport à la position de l'écran semi-transparent et des moyens de calcul des images de façon que la position de l'image de l'objet prédéterminé reste immobile dans un repère prédéterminé.

Avantageusement, le dispositif de visualisation fonctionne en mode polarisé, la paire de lunettes comportant un premier verre ayant une première polarisation et un second verre ayant une seconde polarisation, différente de la première polarisation, les images étant émises selon la première polarisation.

Avantageusement, les images sont émises à une et une seule longueur d'onde, le premier verre comportant un filtre transmettant la totalité du spectre à l'exception d'une première bande spectrale étroite centrée sur ladite première longueur d'onde.

Avantageusement, les images sont émises dans trois bandes spectrales différentes, le premier verre comportant un filtre transmettant la totalité du spectre à l'exception desdites trois bandes spectrales.

Avantageusement, le dispositif de visualisation fonctionne en mode séquentiel, les images étant émises en alternance, la paire de lunettes comportant des moyens agencés de façon que la transparence du premier verre de lunette varie de la transparence à l'opacité de façon synchrone avec l'émission desdites images, le premier verre étant opaque lorsque les images sont émises.

Avantageusement, le système de visualisation est un système de planche de bord d'aéronef.

L'invention sera mieux comprise et d'autres avantages apparaîtront à la lecture de la description qui va suivre donnée à titre non limitatif et grâce aux figures annexées parmi lesquelles :
La figure 1 représente une première architecture d'un système de visualisation selon l'invention dédiée à un observateur unique ;
La figure 2 représente le principe de fonctionnement des lunettes selon l'invention.

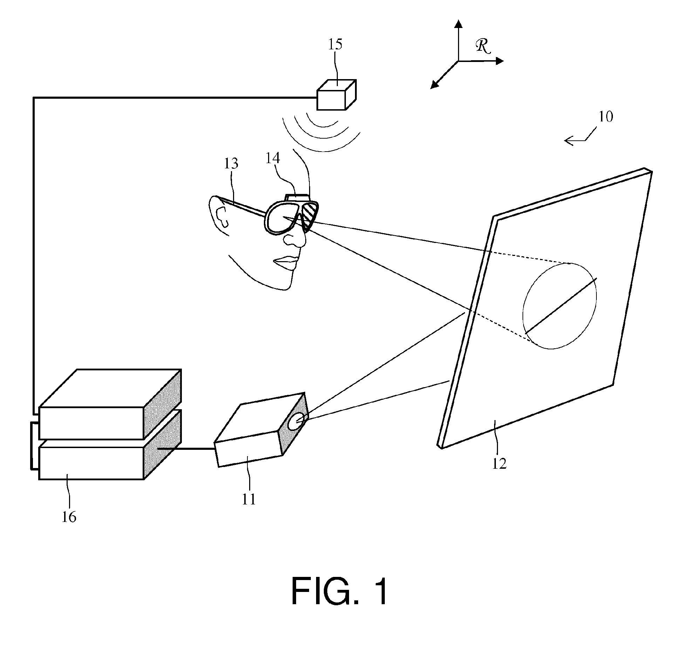

A titre d'exemple, un système de visualisation selon l'invention est représentée en figure 1. Il comporte essentiellement :
- Un projecteur 11 d'images capable de générer une image représentative d'un objet et destiné à être perçue par un seul oeil. Dans le cas de la figure 1, l'objet est un cercle barré ;
- Un écran 12 semi-transparent diffusant sur lequel sont projetées lesdites images ;
- Une paire de lunettes 13 comportant un premier verre transmettant ladite image et un second verre ne la transmettant pas, les deux verres transmettant le paysage extérieur et des premiers moyens de détection 14 et destinée à être portée par un utilisateur ;
- des seconds moyens de détection 15 liés à un repère fixe 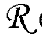 et qui, associés aux premiers moyens de détection 14 permettent la détection de la position spatiale de la paire de lunettes 13 dans ce repère fixe ;
- Un calculateur électronique 16 comprenant au moins les fonctions suivantes :
   o Acquisition des signaux issus des moyens de détection 14 et /ou 15 et calcul de la position de la paire de lunettes ;
   o Calcul de la position de l'image correspondant à la position de la paire de lunettes ;
   o Calcul de ladite image.

Le projecteur 11 d'images stéréoscopiques comporte un afficheur haute résolution généralement de petites dimensions et une optique de projection ayant un grandissement qui peut être important. Pour les applications aéronautiques, il est important que la luminance maximale de l'afficheur puisse être très élevée. Les images sont codées par l'afficheur de façon à pouvoir être vues par un seul des deux verres de la paire de lunettes 13.

L'écran semi-transparent 12 est une lame optique possédant à la fois une semi-transparence du paysage extérieur et une diffusion des images stéréoscopiques. A cette fin, la surface de l'écran de projection peut comporter un réseau de motifs diffusants ou « patterns ». La diffusion de l'écran se fait dans un large angle de vue, voisin du demi-espace. On obtient ainsi une boite à oeil de grande dimension. On entend par « boîte à oeil » la zone de l'espace où l'image est visible. Cette solution permet également de maîtriser parfaitement la transparence de l'écran. Ainsi, si les motifs ne couvrent qu'un pourcentage limité de la surface de l'écran, la transmission de l'écran est égale à l'unité moins le pourcentage couvert par les motifs. Par exemple, si les motifs couvrent 20% de la surface, la transmission de l'écran est voisine de 80%.

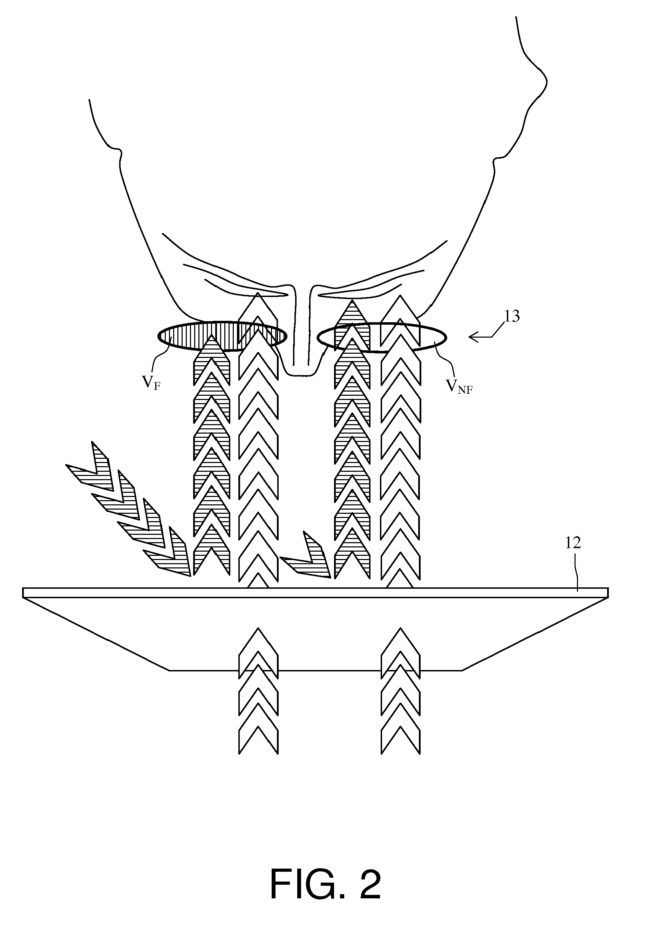

La fonction de la paire de lunettes 13 est schématisée sur la figure 2. Le paysage extérieur est représenté par une série de chevrons blancs et l'image issue du projecteur par une série de chevrons rayés. La paire de lunettes 13 comporte un verre V_{F} filtrant totalement l'image issue du projecteur et laissant passer, même partiellement, le paysage extérieur. Le second verre V_{NF} laisse passer à la fois le paysage extérieur et l'image numérique.

Il existe différents moyens permettant de transmettre ou de ne pas transmettre une image tout en gardant une certaine transmission de l'extérieur.

Dans une première solution technique, le projecteur fonctionne en mode polarisé, il émet une image selon une polarisation déterminée. La paire de lunettes 13 comporte un premier verre polarisé opaque à la polarisation déterminée et un second verre polarisé transparent à ladite polarisation. Cette solution a l'avantage de ne nécessiter qu'une paire de lunettes passive. Cependant, la conservation de la polarisation par l'écran semi-transparent nécessite l'emploi de motifs non diffusants.

Dans une seconde solution technique, le projecteur fonctionne en mode séquentiel, il émet successivement et périodiquement les images. La paire de lunettes comporte un premier verre transparent pendant les séquences d'émission des images et un second verre opaque pendant lesdites séquences. Pendant les séquences où les images ne sont pas émises par le projecteur, les deux verres sont transparents. On peut ainsi facilement réguler la transmission du paysage extérieur en utilisant des durées différentes d'émission et de non émission des images. Les variations de transmission des verres de lunette sont assurées en utilisant, par exemple, des verres à cristaux liquides actifs ou des micro-interrupteurs mécaniques, connus également sous le nom de « shutters ».

Dans une troisième solution technique, on réalise une sélection spectrale des images projetées. Le projecteur émet une image colorée dont le spectre est déterminé. La paire de lunettes comporte un premier verre comportant un filtre spectral qui bloque ledit spectre, le second verre ne comporte pas ce filtre.

L'image peut être monochrome ou colorée. Dans le cas d'une image monochrome, il est intéressant d'utiliser une bande spectrale dont la largeur est la plus faible possible en utilisant, par exemple, une source d'éclairage laser de façon que le filtre coupe une bande spectrale de très faible largeur, ne dépassant pas quelques nanomètres. Ainsi, la transmission du paysage extérieur est très faiblement affectée. La réalisation de tels filtres de coupure à bande étroite ne pose pas de problèmes particuliers de réalisation.

Le système de détection de la position de la paire de lunettes n'est pas essentiel à l'invention. En effet, la fonction de ce système est de repérer la paire de lunettes dans l'espace et d'en déduire, connaissant sa position, la position de l'image projetée de façon qu'elle apparaisse fixe dans un repère donné. On comprend que, pour un certain nombre d'applications, il n'est pas nécessairement utile que cette fonction soit présente. Par exemple, l'affichage de données de vol n'a pas nécessairement besoin d'être affiché dans une direction déterminée. A l'inverse, un certain nombre de symboles ou d'images doivent être parfaitement superposé sur l'extérieur. On dit que ces symboles sont affichés en représentation conforme, c'est-à-dire qu'ils apparaissent à l'utilisateur dans la direction et sous l'angle sous lesquels ils apparaîtraient s'ils étaient réellement dans le paysage. Dans ce dernier cas, le système de détection de la position de la paire de lunettes est indispensable.

Ce système de détection comporte classiquement deux sous-ensembles, le premier sous-ensemble 14 est fixé à la paire de lunettes, le second sous-ensemble 15 est disposé dans un repère fixe.

Il existe différentes techniques permettant de repérer un objet dans l'espace. On peut utiliser la détection électromagnétique. Un émetteur est disposé dans le repère fixe et un récepteur dans le repère mobile. On peut également utiliser la détection optique qui peut être passive ou active. Dans ce dernier cas, la paire de lunettes porte des diodes électroluminescentes dont la position de l'émission est repérée par des caméras. Toutes ces techniques sont connues de l'homme du métier. Elles sont compatibles d'un fonctionnement en temps réel et s'adaptent facilement au système de visualisation selon l'invention.

Le fonctionnement du système de visualisation est alors le suivant. Lorsque l'utilisateur bouge la tête, ces mouvements sont captés par les moyens de détection de la paire de lunette. Le calculateur électronique recalcule alors en temps réel la position des images de façon que l'utilisateur continue de voir l'image virtuelle de l'objet à la même place.

Le système selon l'invention s'applique tout particulièrement au domaine des planches de bord d'aéronef où le pilote a besoin à la fois de voir l'extérieur et d'avoir des informations sur la conduite de vol ou la navigation de l'appareil sans avoir de problèmes d'accommodation qui peuvent se révéler hautement pénalisants. L'application dans le domaine des hélicoptères est particulièrement intéressante dans la mesure où les hélicoptères possèdent des verrières de grande dimension et sont amenés à effectuer des vols à basse altitude.

## Revendications

1. Système de visualisation (10) comprenant des moyens de génération (16) d'images d'un objet prédéterminé et un dispositif de visualisation (11) comportant un écran semi-transparent (12) de projection sur lequel se forment lesdites images, **caractérisé en ce que** le système de visualisation comporte une paire de lunettes (13) comportant deux verres, le premier verre transmettant lesdites images, le second verre ne les transmettant pas, les deux verres transmettant le paysage extérieur.

2. Système de visualisation selon la revendication 1, **caractérisé en ce que** le système comporte des moyens de détection (14, 15) de la position relative de ladite paire de lunettes par rapport à la position de l'écran semi-transparent et des moyens de calcul des images de façon que la position de l'image de l'objet prédéterminé reste immobile dans un repère prédéterminé.

3. Système de visualisation selon la revendication 1, **caractérisé en ce que** le dispositif de visualisation fonctionne en mode polarisé, la paire de lunettes comportant un premier verre ayant une première polarisation et un second verre ayant une seconde polarisation, différente de la première polarisation, les images étant émises selon la première polarisation.

4. Système de visualisation selon la revendication 1, **caractérisé en ce que** les images sont émises à une et une seule longueur d'onde, le premier verre comportant un filtre transmettant la totalité du spectre à l'exception d'une première bande spectrale étroite centrée sur ladite première longueur d'onde.

5. Système de visualisation selon la revendication 1, **caractérisé en ce que** les images sont émises dans trois bandes spectrales différentes, le premier verre comportant un filtre transmettant la totalité du spectre à l'exception desdites trois bandes spectrales.

6. Système de visualisation selon la revendication 1, **caractérisé en ce que** le dispositif de visualisation fonctionne en mode séquentiel, les images étant émises en alternance, la paire de lunettes comportant des moyens agencés de façon que la transparence du premier verre de lunette varient de la transparence à l'opacité de façon synchrone avec l'émission desdites images, le premier verre étant opaque lorsque les images sont émises.

7. Système de visualisation selon l'une des revendications précédentes, **caractérisé en ce que** le système de visualisation est un système de planche de bord d'aéronef.
